# EUROPEAN PATENT APPLICATION

(11) **EP 4 242 061 A1**
(43) Date of publication of application: **13.09.2023**
(21) Application number: 21888450.0
(22) Date of filing: 26.10.2021
(51) Int. Cl.: B60Q 3/60, B60Q 3/70

(54) **VEHICLE INTERIOR TRIM COMPONENT**

(30) Priority: 03.11.2020 CN 202011208830
(71) Applicant: Shanghai Yanfeng Jinqiao Automotive Trim Systems Co., Ltd., Shanghai 201206 (CN)
(72) Inventor: GU, Jing, Shanghai 201315 (CN); ZHANG, Jixiang, Shanghai 201315 (CN)
(74) Representative: Meissner Bolte Partnerschaft mbB
(86) International application number: PCT/CN2021/126367
(87) International publication number: WO 2022/095753

(57) **Abstract**

The present invention discloses a vehicle interior trim, comprising: a light-emitting unit; a lens layer, wherein the lens layer comprises an incident surface and/or an emergent surface configured as a curved surface and/or a prismatic surface; an imaging layer, wherein the imaging layer is configured to receive light emitted by the light-emitting unit, and the light is projected on the imaging layer through the lens layer to form a projection; and a cover layer, wherein the projection on the imaging layer is rendered visible through the cover layer. The vehicle interior trim of the present invention provides rich and multi-level light display effects for a vehicle cockpit, particularly complex stereoscopic light display effects, which greatly enhance the sense of luxury and technology in the cockpit.

## Description

### FIELD OF THE INVENTION

The present invention generally relates to a vehicle interior trim technology, and particularly relates to a vehicle interior trim having a light-emitting function.

### BACKGROUND

With the advent of the era of intelligent and connected vehicles, the level of vehicle intelligence is constantly being improved, and the technology of the cockpit in the vehicle interior is also constantly being upgraded. Highly intelligent mobile cockpits are favored and expected by markets and consumers. Due to the unique advantages of lighting technology in atmosphere creation, human-computer interaction, and riding experience, various new technologies combined with lighting in the vehicle cockpit are being constantly developed and have been greatly developed.

However, several light-emitting technical solutions currently available on the market are limited to traditional lighting decoration solutions such as perforation for light transmission and decoration with a light-transmissive film or a leaded light strip, which are limited by materials and lighting technology in decoration, sense of luxury, and perception of technology, and lack of complex stereoscopic lighting effects and functions, resulting in poor user experience. In view of the above, the market is in urgent need of a solution for multi-level stereoscopic lighting decoration with characteristics of top grade, luxury, and perception of technology, so as to better meet the growing needs of end-users for a better life.

### SUMMARY

The present invention aims to overcome the above defects in the prior art by providing a vehicle interior trim having a light-emitting function.

To achieve the above aim, the present invention provides a vehicle interior trim, including:
- a light-emitting unit;
- a lens layer, wherein the lens layer contains an incident surface and/or an emergent surface configured as a curved surface and/or a prismatic surface;
- an imaging layer, wherein the imaging layer is configured to receive light emitted by the light-emitting unit, and the light is projected on the imaging layer through the lens layer to form a projection; and
- a cover layer, wherein the projection on the imaging layer is rendered visible through the cover layer.

According to the above technical concept, the present invention may further include any one or more of the following optional forms.

In some optional forms, the imaging layer contains a translucent material to render the lens layer invisible.

In some optional forms, the imaging layer contains a flat surface and/or a prismatic surface to enable the projection on the imaging layer to present a two-dimensional and/or three-dimensional effect.

In some optional forms, the prismatic surface of the lens layer has a sharp angle, the sharp angle being an R angle having an R value set to be 0.01 -0.09 mm.

In some optional forms, the imaging layer is formed by paint spraying or by physical vapor deposition plating.

In some optional forms, the imaging layer contains at least one of materials of polycarbonate, acrylic, acrylonitrile-butadiene-styrene, nylon, polypropylene, polyurethane, metal, printing ink, wood, and fabric.

In some optional forms, the light-emitting unit is configured to provide monochromatic or polychromatic light.

In some optional forms, the light-emitting unit is configured to provide at least one of dynamic effects of a running light effect, a breathing light effect, and an intermittent light-dark effect.

In some optional forms, the cover layer contains at least one of materials of polycarbonate, acrylic, acrylonitrile-butadiene-styrene, nylon, polypropylene, polyurethane, metal, printing ink, wood, fabric, epoxy resin, and UV paint.

In some optional forms, the cover layer has a thickness of 0.5-50 mm, preferably 1-15 mm.

In some optional forms, the cover layer further contains a protective material having a thickness of 0.05-5 mm, preferably 0.1-2 mm, and a hardness of 1H or above, or further contains at least one of protective materials having a thickness of 0.05-5 mm, preferably 0.1-2 mm, and with weather resistance, stain resistance, chemical resistance or scratch resistance.

In some optional forms, the cover layer and/or the imaging layer are configured to provide any one or more of patterns, textures, and colors.

In some optional forms, the vehicle interior trim further includes a light-homogenizing layer disposed between the light-emitting unit and the lens layer or between the lens layer and the imaging layer.

In some optional forms, the imaging layer and the cover layer are disposed at an interval, or the imaging layer and the cover layer are bonded by means of an optical adhesive.

In some optional forms, the imaging layer and the lens layer are disposed at an interval, and the imaging layer and the lens layer are arranged parallel to each other or at an angle.

The present invention discloses a vehicle interior trim with lighting effects, which provides rich and multi-level light display effects for a vehicle cockpit, particularly complex stereoscopic light display effects, which greatly enhance the sense of luxury and technology in the cockpit. When the light-emitting unit of the vehicle interior trim does not emit light, the whole interior trim acts as a conventional interior trim, while when the light-emitting unit emits light, the whole interior trim acts as an interior trim with light display effects.

Other features and aspects of the present invention will be apparent from the following description and the drawings.

### BRIEF DESCRIPTION OF DRAWINGS

Other features and advantages of the present invention will be better understood by preferred embodiments as described in detail below with reference to the drawings, in which identical reference numerals represent identical or similar components.
- FIG. 1: shows a schematic view of a vehicle interior trim according to the present invention applied to the vehicle interior;
- FIG. 2: shows a schematic cross-sectional view of a vehicle interior trim according to one embodiment of the present invention;
- FIG. 3: shows a schematic cross-sectional view of a vehicle interior trim according to another embodiment of the present invention;
- FIG. 4: shows a schematic cross-sectional view of a vehicle interior trim according to yet another embodiment of the present invention; and
- FIG. 5: shows a schematic cross-sectional view of a vehicle interior trim according to yet another embodiment of the present invention.

It should be understood by the skilled person that elements in the drawings are illustrated for simplicity and clarity and are not necessarily drawn to scale. For example, the dimensions of some of the elements in the drawings may be exaggerated relative to other elements to help improve the understanding of the embodiments of the present invention.

### DETAILED DESCRIPTION

As one of ordinary skill in the art will understand, various features of the embodiments illustrated and described with reference to any one of the drawings may be combined with features illustrated in one or more other drawings to produce other embodiments that are not explicitly illustrated or described. The combinations of the features shown provide representative embodiments for typical applications. However, various combinations and modifications of the features consistent with the teachings disclosed herein may be desired for a particular application or implementation.

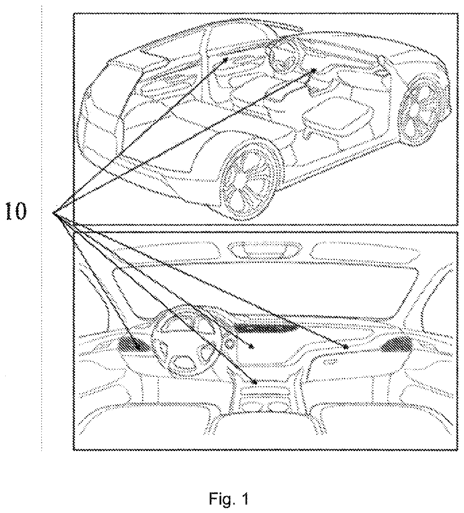

Referring to FIG. 1, a vehicle interior trim 10 described herein is applied to the vehicle interior, optionally to a dashboard, an inner door panel, and a center console region of the vehicle. The vehicle interior 10 has a light-emitting function after the power is on. The vehicle interior plays the role of a conventional vehicle interior trim when the power is off, i.e., when the light is not emitted, while has a stereoscopic or dynamic light display effect when the power is on, i.e., when the vehicle interior 10 emits light, which can significantly increase the sense of luxury and technology in the vehicle cockpit.

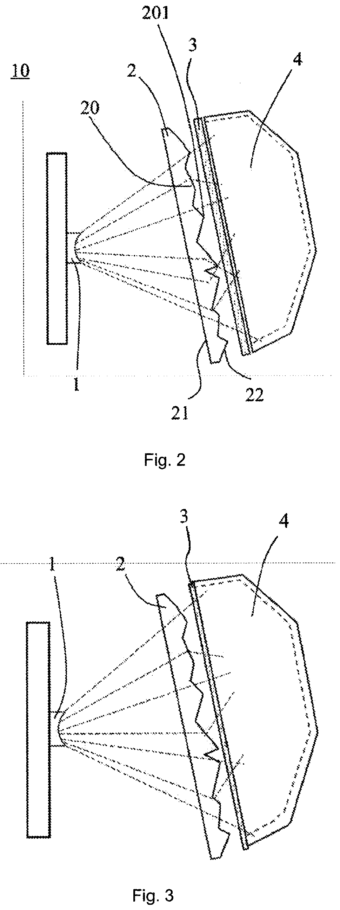

In an optional embodiment, as shown in FIG. 2, the vehicle interior trim 10 includes a light-emitting unit 1, a lens layer 2, an imaging layer 3, and a cover layer 4. The light-emitting unit 1 emits light when the power is on. The lens layer 2 contains an incident surface 21 and an emergent surface 22 along the propagation direction of the light, the incident surface 21 and/or the emergent surface 22 being configured as a curved surface and/or a prismatic surface to enable the light to undergo multiple refractions and reflections when passing through the lens layer 2. The imaging layer 3 is configured to receive light emitted by the light-emitting unit 1, the light being projected on the imaging layer 3 through the lens layer 2 to form a projection. The cover layer 4 renders the projection on the imaging layer 3 visible through the cover layer 4. Specifically, the cover layer 4 is located downstream of the imaging layer 3 in the propagation direction of the light, and when the vehicle interior trim 10 is installed in the vehicle interior, the occupant in the cockpit does not directly see the projection formed on the imaging layer 3, but indirectly sees the projection formed on the imaging layer 3 through the cover layer 4, that is, the exterior surface of the cover layer 4 forms the exterior surface of the vehicle interior trim 10 that can be touched by the occupant in the cockpit. In particular, by providing the cover layer 4, the occupant in the cockpit observes a projection on the imaging layer 3 having a certain depth, thereby forming a depth perception, i.e., a stereoscopic perception or a distance perception, of the projection.

In an exemplary embodiment, as shown in FIG. 2, the incident surface 21 of the lens layer 2 is a flat surface, and the emergent surface 22 is a prismatic surface. Taking the prismatic surface as an example, the prismatic surface is formed by a plurality of prismatic structures 20, including triangular prismatic structures, quadrangular prismatic structures, and/or polygonal prismatic structures, each prismatic structure forming an uneven regular and/or irregular prismatic surface, which acts to converge and/or diverge the light incident thereon. Optionally, the prismatic structure has a sharp angle 201, the sharp angle being an R angle, which may have an R value set to be 0.01-0.09 mm. The R angles of the prismatic structures may have the same and/or different R values.

Optionally, the imaging layer 3 is formed by paint spraying or by physical vapor deposition (PVD) plating. The imaging layer 3 may be only a projection film formed by a paint spraying or PVD plating process, and at this time, the light emitted by the light-emitting unit 1 arrives at the projection film through the lens layer 2 and is imaged on the projection film, finally forming a projection. Optionally, the imaging layer 3 contains at least one of materials of polycarbonate (PC), acrylic (PMMA), acrylonitrile-butadiene-styrene (ABS), nylon (PA), polypropylene (PP), polyurethane (PU), metal, printing ink, wood, and fabric, at least one of these materials being transparent or translucent.

Preferably, the imaging layer 3 contains a translucent material, and the lens layer 2 is located upstream of the imaging layer 3 in the propagation direction of light. Therefore, the imaging layer 3 comprising the translucent material renders the lens layer 2 invisible, so that the imaging layer 3 acts to mask the lens layer 2.

The light emitted by the light-emitting unit 1 forms a projection on the imaging layer 3 when arriving at it. In order to create a projection effect, the imaging layer 3 optionally contains flat and/or prismatic surfaces to enable the projection on the imaging layer 3 to present a two-dimensional and/or three-dimensional effect. Further, the light-emitting unit 1 may be configured to provide monochromatic or polychromatic light. Specifically, the light-emitting unit 1 includes at least one lamp bead (e.g., LED), and the monochromatic or polychromatic light may be implemented by one lamp bead or a plurality of lamp beads. In addition to changing the color of light emitted by the light-emitting unit 1, the light-emitting frequency of the light-emitting unit 1 can be changed.

Moreover, when there is a plurality of lamp beads, the light-emitting sequence of the plurality of lamp beads can be changed, so that the light-emitting unit 1 is configured to provide at least one of dynamic effects of a running light effect, a breathing light effect, and an intermittent light-dark effect, thereby enabling the projection on the imaging layer 3 to present a colorful, static and/or dynamic two-dimensional and/or three-dimensional effect.

It is noted that the two-dimensional and/or three-dimensional effect presented by the projection on the imaging layer 3 is completely formed by enabling the light emitted by the light-emitting unit 1 to pass through the lens layer 2 and arrive at the imaging layer 3. The two-dimensional and/or three-dimensional effect should not be visible when the light-emitting unit 1 does not emit light. Moreover, depending on the prismatic structures of the lens layer 2, the effects of light refraction and/or reflection through the lens layer 2 are different. Therefore, the lens layer 2 may be structurally designed according to the projection effect to be presented by the imaging layer 3. Although only the lens layer 2 configured as a single one is shown in FIG. 2, in an optional embodiment, the lens layer 2 may include a plurality of lens layers stacked together along the propagation direction of the light, so that the effects of light refraction and/or reflection through the lens layers are more variable and richer.

For the cover layer 4, it may contain the same or different material as the imaging layer. Optionally, the cover layer contains at least one of materials of polycarbonate (PC), acrylic (PMMA), acrylonitrile-butadiene-styrene (ABS), nylon (PA), polypropylene (PP), polyurethane (PU), metal, printing ink, wood, fabric, epoxy resin, and UV paint. In order to enable the occupant in the cockpit to observe a projection having a certain depth, a cover layer having a thickness set to be 0.5-50 mm, preferably 1-15 mm, may be provided. In certain cases, the cover layer 4 containing the above materials has a certain decorative function.

Further, for the cover layer having a decorative function, in order to enable the cover layer 4 to meet the requirements of the vehicle for the surface performance of the interior trim, on the basis of the above cover layer having the thickness set to be 0.5-50 mm, preferably 1-15 mm, the cover layer 4 may further contain a protective material set to a certain thickness. Optionally, the cover layer 4 further contains a protective material (such as polycarbonate, acrylic, nylon or polypropylene) having a thickness of 0.05-5 mm, preferably 0.1-2 mm, and a hardness level of 1H or above, or the cover layer 4 further contains at least one of protective materials (such as thermosetting polyurethane, epoxy resin or UV paint) having a thickness of 0.05-5 mm, preferably 0.1-2 mm, and with weather resistance, stain resistance, chemical resistance or scratch resistance. When the cover layer 4 additionally contains the above protective materials, the occupant in the cockpit will not feel the difference between the cover layer 4 and other conventional vehicle interior trims when touching the cover layer 4.

In an optional embodiment, the cover layer 4 and/or the imaging layer 3 may be configured to provide any one or more of patterns, textures, and colors, for example, a monochromatic line pattern or a gradient line pattern. Thus, the occupant in the cockpit can also observe specific patterns and/or textures and/or colors in an abstract light projection, for example, flowing streamers with multiple colors mixed.

As shown in FIG. 2, the imaging layer 3 and the cover layer 4 are arranged at an interval, or as shown in FIG. 3, the imaging layer 3 and the cover layer 4 are bonded by means of an optical adhesive. In particular, in the configuration shown in FIG. 3, when the cover layer 4 is made from the same material as the imaging layer 3, the cover layer 4 having a certain thickness is equivalent to a thickening of the thickness of the imaging layer 3. It is noted that the distance between the imaging layer 3 and the cover layer 4 is optionally 0-100 mm whether the imaging layer 3 and the cover layer 4 are disposed at an interval or in a bonding manner.

As shown in FIGs. 2 and 3, the imaging layer 3 and the lens layer 2 are disposed at an interval, and the imaging layer 3 and the lens layer 2 are arranged parallel to each other. In an optional embodiment, the imaging layer 3 and the lens layer 2 are arranged at an angle to each other.

Therefore, the distances and/or angles of the lens layer 2, the imaging layer 3, and the cover layer 4 to one another can be adjusted according to the size of the space occupied by the entire vehicle interior trim 10 and the desired light display effect. Further, the distances and/or angles of the light-emitting unit 1, the lens layer 2, the imaging layer 3, and the cover layer 4 to one another may be adjusted.

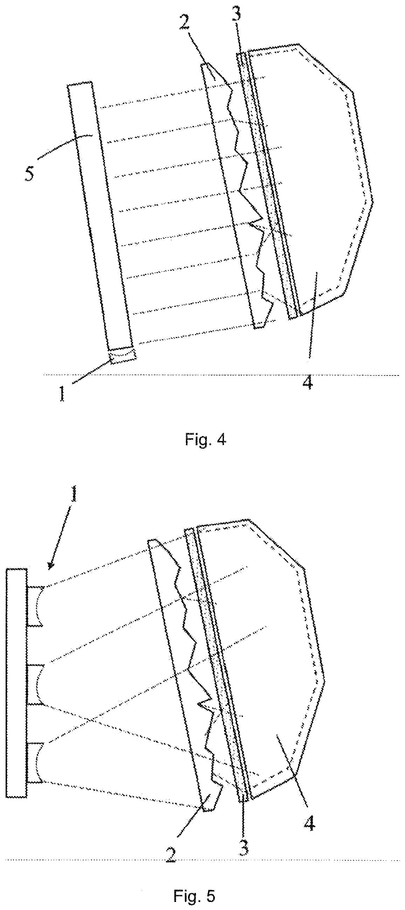

As shown in FIG. 4, the vehicle interior trim further includes a light-homogenizing layer 5, the light-homogenizing layer 5 being disposed between the light-emitting unit 1 and the lens layer 2. As shown in FIGs. 2 to 4, the light-emitting unit 1 exemplarily includes one lamp bead, and as shown in FIG. 5, the light-emitting unit 1 exemplarily includes three lamp beads. When the light-homogenizing layer 5 is not provided, the light emitted by the three lamp beads distributed at intervals is more homogenous than that emitted by one lamp bead, while by providing the light-homogenizing layer 5, the light can be homogenized even by using only one lamp bead under the scattering effect of the light-homogenizing layer 5 on the light.

In an optional embodiment, a light-homogenizing layer is disposed between the lens layer 2 and the imaging layer 3 (not shown).

The vehicle interior trim on the basis of the present invention plays the role of a conventional vehicle interior trim when the light-emitting unit does not emit light, and can further provide various light display effects when the light-emitting unit emits light.

The exemplary embodiments disclosed herein may be subject to various substitutions, combinations, or modifications, all of which remain within the concept of the present invention and fall within the scope of protection defined by the claims of the present invention, without departing from the spirit of the present invention.

## Claims

1. A vehicle interior trim, comprising:
- a light-emitting unit;
- a lens layer, wherein the lens layer comprises an incident surface and/or an emergent surface configured as a curved surface and/or a prismatic surface;
- an imaging layer, wherein the imaging layer is configured to receive light emitted by the light-emitting unit, and the light is projected on the imaging layer through the lens layer to form a projection; and
- a cover layer, wherein the projection on the imaging layer is rendered visible through the cover layer.

2. The vehicle interior trim according to claim 1, wherein the imaging layer comprises a translucent material to render the lens layer invisible.

3. The vehicle interior trim according to claim 1, wherein the imaging layer comprises a flat surface and/or a prismatic surface to enable the projection on the imaging layer to present a two-dimensional and/or three-dimensional effect.

4. The vehicle interior trim according to claim 1, wherein the prismatic surface of the lens layer has a sharp angle, the sharp angle being an R angle having an R value set to be 0.01-0.09 mm.

5. The vehicle interior trim according to claim 1, wherein the imaging layer is formed by paint spraying or by physical vapor deposition plating.

6. The vehicle interior trim according to claim 1, wherein the imaging layer comprises at least one of materials of polycarbonate, acrylic, acrylonitrile-butadiene-styrene, nylon, polypropylene, polyurethane, metal, printing ink, wood, and fabric.

7. The vehicle interior trim according to claim 1, wherein the light-emitting unit is configured to provide monochromatic or polychromatic light.

8. The vehicle interior trim according to claim 1, wherein the light-emitting unit is configured to provide at least one of dynamic effects of a running light effect, a breathing light effect, and an intermittent light-dark effect.

9. The vehicle interior trim according to claim 1, wherein the cover layer comprises at least one of materials of polycarbonate, acrylic, acrylonitrile-butadiene-styrene, nylon, polypropylene, polyurethane, metal, printing ink, wood, fabric, epoxy resin, and UV paint.

10. The vehicle interior trim according to claim 9, wherein the cover layer has a thickness of 0.5-50 mm, preferably 1-15 mm.

11. The vehicle interior trim according to claim 9 or 10, wherein the cover layer further comprises a protective material having a thickness of 0.05-5 mm, preferably 0.1-2 mm, and a hardness of 1H or above, or further comprises at least one of protective materials having a thickness of 0.05-5 mm, preferably 0.1-2 mm, and with weather resistance, stain resistance, chemical resistance or scratch resistance.

12. The vehicle interior trim according to claim 1, wherein the cover layer and/or the imaging layer are configured to provide any one or more of patterns, textures, and colors.

13. The vehicle interior trim according to claim 1, further comprising a light-homogenizing layer disposed between the light-emitting unit and the lens layer or between the lens layer and the imaging layer.

14. The vehicle interior trim according to claim 1, wherein the imaging layer and the cover layer are disposed at an interval, or the imaging layer and the cover layer are bonded by means of an optical adhesive.

15. The vehicle interior trim according to claim 1, wherein the imaging layer and the lens layer are disposed at an interval, and the imaging layer and the lens layer are arranged parallel to each other or at an angle.
